# EUROPEAN PATENT SPECIFICATION

(11) **EP 1 987 990 B1**
(45) Date of publication and mention of the grant of the patent: **27.09.2017**
(21) Application number: 07425257.8
(22) Date of filing: 30.04.2007
(51) Int. Cl.: B60R 16/03, H04B 1/16

(54) **Electronic control unit for a vehicle with a device for controlling supply of the electronic control unit**
Elektronische Steuereinheit für ein Fahrzeug mit einer Vorrichtung zur Steuerung der Stromversorgung der elektronischen Steuereinheit
Unité de commande électronique pour véhicule avec un dispositif pour contrôler l'alimentation d'une unité de commande électronique

(43) Date of publication of application: 05.11.2008
(73) Proprietor: Automotive Lighting Italia S.p.A., Venaria Reale (TO) (IT)
(72) Inventor: Bergamini, Alessandro, VENARIA REALE (TO) (IT)
(74) Representative: Cerbaro, Elena

(56) References cited:
- EP-A- 1 643 654
- WO-A-2006/027843
- DE-A1-102004 026 383
- JP-A- 2007 057 885
- US-A- 4 031 363
- US-A1- 2005 272 482
- SCHNEIDER H: "SYSTEM INTEGRATION, STANDARDS AND COST IMPLICATIONS FOR AUTOMOTIVE TELEMATICS" VDI BERICHTE, DUESSELDORF, DE, no. 1415, 8 October 1998 (1998-10-08), pages 835-856, XP002283074 ISSN: 0083-5560
- DATABASE WPI Week 200736 Derwent Publications Ltd., London, GB; AN 2007-381699 XP002460203 "Electro optical apparatus e.g. LCD for electronic device e.g. mobile phone, has resin covering in outer edge of electronic component surface facing wiring board of connecting terminal and main substrate" & JP 2007 057885 A (SANYO EPSON IMAGING DEVICES CORP) 8 March 2007 (2007-03-08)

## Description

The present invention relates to an electronic control unit for a vehicle, in particular an electronic control unit for controlling telematic devices of a motor vehicle, comprising an integrated device for controlling supply of the electronic control unit.

As is known, modern motor vehicles are equipped with electronic control units for controlling specific functions of the vehicle, such as, for example, ignition of the vehicle engine, fuel injection, activation and deactivation of the electrical loads of the vehicle, and/or for controlling operation of a telematic device housed on board the vehicle, such as, for example, the satellite navigator, a GSM telephone, etc.

Frequently, modern motor vehicles are provided with a number of electronic control units, for example one that controls the engine functions, and another that controls the functionality of telematic devices installed on board the motor vehicle, the electronic modules of which are each connected to a respective device for regulation of its own supply voltage.

The use of a number of electronic control units of the aforesaid type, albeit enabling electronic control of an increasingly larger number of functions of the motor vehicle, presents, however, various disadvantages such as, for example, that of rendering the motor vehicle more vulnerable on account of failures deriving from the possible malfunctioning of the electronic control units, that of increasing the space necessary for housing electronic control units on board the vehicle, and that of increasing the costs for the electronics installed on board the vehicle.

In particular, one of the most frequent causes of malfunctioning of the electronic modules of electronic control units of the vehicle derive from an insufficient supply voltage supplied by the battery of the vehicle (to which the electronic control units are connected) and/or from a malfunctioning of the devices for regulation of the voltage for supplying the electronic modules.

In fact, since electronic control units of motor vehicles are supplied by the battery that supplies the vehicle it is clear how proper operation of each of the electronic modules depends upon the supply voltage supplied by the battery of the vehicle, as well as upon proper operation of the electronic devices for regulation of their supply voltage and current.

Consequently, there is felt the need for an electronic control unit of a vehicle that will enable the drawbacks of the known electronic control units referred to above to be overcome.

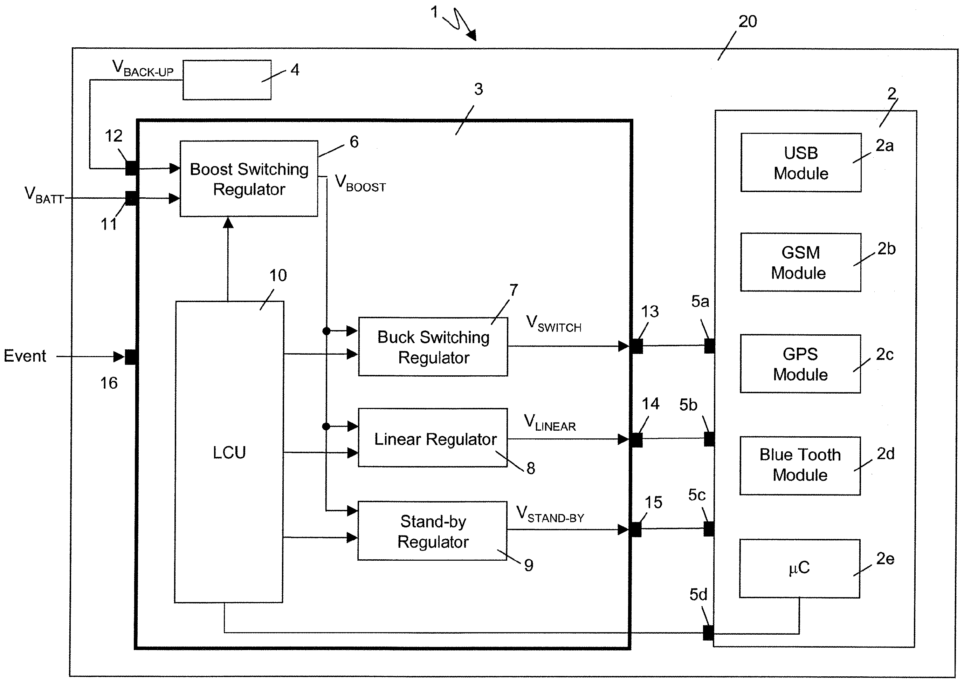

Schneider, H.: "Systemintegration, Standards und Kostenaspekte der Kfz-Telematic" Bericte No. 1415, VDI-Verlag Düsseldorf (DE), 08.10.1998, pages 835-856 - XP 002 283 074, claims in the introduction to this document that the improvements in the electrical engineering and communications technology offer a car driver a huge potential of new low cost functions and services, and that considerable price reductions can be achieved by employing, under prevention of redundancies, a modular concept and simultaneously higher hardware integration and increased transition to software solutions. Standardised solutions such as "plug and play" are considered as precondition for a common market acceptance, what the auto industry is not willing to accept yet. The consequences are customer-specific solutions, which cost more development effort and time and, additionally, tie the car industry down to their suppliers. A further negative effect is the delay of the implementation of a plurality of innovative functions. Therefore, there exists a considerable need for standardisation for modular interfaces as well as air interfaces for new services. For the (hardware) interfaces, standards for autarkic low-cost devices have to be distinguished from system capable modules. In the paragraph bridging pages 840 and 841 and in Figure 3, this document discloses a GSM (hardware) module with corresponding software modules needed for the functions of phone, data communications, internet connection, remote diagnosis, distress call and the like. Audio and video display are only present once in hardware for all functions. A PTA reduces itself to a pure software module in such an environment. Further integrations are possible: for instance, it is possible to integrate the operation and the display into a touch screen, to accommodate all antennas in one universal antenna and to integrate single modules such as radio tuner, DAB, GPS and GSM into one single module. In the last paragraph of page 844 and in Figure 5 this documents further discusses the optimal solution for complex functions with the initial higher cost of a modular concept (modular systems). Modules have to be accommodated in a system housing, since modules are usually not functional alone, which does not provide any cost advantage for a single device. System costs that are below the sum of the costs of single devices can easily be calculated. Cost advantages result already from the combination of only two devices (e.g. telephone + radio, navigation + radio or navigation + telephone).

Aim of the present invention is to provide an electronic control unit of a vehicle and, in particular, of a motor vehicle, comprising an integrated device for controlling supply of the electronic modules of the electronic control unit.

According to the present invention, an electronic control unit of a vehicle is provided, which comprises a control device for supply of the electronic modules of the electronic control unit, as defined in the annexed claims.

For a better understanding of the present invention there is now described a preferred embodiment, purely by way of nonlimiting example, with reference to the attached figure, illustrated in which is a block diagram of an electronic modules of the electronic control unit, built according to the invention.

The figure illustrates the block diagram of an electronic control unit, designated by 1, of a vehicle (not represented in the figure), comprising:
- a casing 20;
- an electronic control unit 2 for telematic devices of the vehicle;
- an integrated device 3 for controlling supply of the electronic control unit 2; and
- an auxiliary supply device 4, for example a back-up battery, for supplying, the electronic control unit 2.

In particular, the electronic control unit 2 comprises a plurality of electronic modules of a telematic type, such as, for example, a module 2a of a USB type, a module 2b of a GSM type, a GPS satellite navigation module 2c, a module 2d of a Bluetooth type, and a microprocessor 2e connected to the modules 2a-2d and to the supply-control device 3, and configured for controlling the modules 2a-2d and the supply-control device 3.

The electronic control unit 2 moreover comprises a plurality of pins 5a-5c for supply of the modules 2a-2d and of the microprocessor 2e, supplied by the control device 3, and a pin 5e for connection of a bidirectional communication line, through which the electronic control unit 2 communicates with the supply-control device 3.

In particular the modules 2a-2d can be each built in the form of an integrated circuit that is housed directly within the electronic control unit 1 of the vehicle, or else, in an alternative embodiment, can be provided in a single integrated circuit that comprises all of them.

The control device 3 of the invention is also made in the form of a single integrated circuit configured for being connected both to the electronic control unit 2 and to each of the integrated circuits that form the modules 2a-2d and the microprocessor 2e or to the integrated circuit that forms all the modules 2a-2d, according to the embodiment of the latter, and is housed within the casing 20 of the electronic control unit 1 of the vehicle.

The control device 3 comprises:
- an electronic voltage-control-and-boosting unit 6 (Boost Controller) for controlling and boosting a voltage V*_{BATT}* for supplying the electronic control unit 1 of the vehicle, supplied by an electric power-supply device, for example the battery of the vehicle (not illustrated in the figure);
- at least one regulator 7 of the buck-switching type (also referred to as "step-down adjustable") of a voltage *V_{SWITCH}* for supplying the electronic control unit 2;
- at least one regulator of a linear-adjustable type 8 of a voltage V*_{LINEAR}* for supplying the electronic control unit 2;
- at least one standby adjustable regulator 9 of a stand-by voltage *V_{STAND-BY}* of the electronic control unit 2;
- a logic control unit 10, connected to the electronic voltage-control-and-boosting unit 6, with the voltage regulators 7, 8 and 9, and with the microprocessor 2e, configured for controlling the voltage regulators 7, 8 and 9 and for communicating with the microprocessor 2e;
- a pin 11 for connection of the battery of the vehicle to the control device 3;
- a pin 12 for connection of the back-up battery of the electronic control unit 1 of the vehicle to the control device 3;
- a pin 13 that supplies the control unit 2 with the voltage *V_{SWITCH}* at output from the switching regulator 7;
- a pin 14 that supplies the control unit 2 with the voltage V*_{LINEAR}* at output from the linear regulator 8;
- a pin 15 that supplies the control unit 2 with the voltage V*_{STAND-BY}* at output from the regulator 9; and
- a pin 16 that supplies the control unit 2 with signals indicating events that require activation of the modules 2a-2d.

In particular, the electronic voltage-control-and-boosting unit 6, receives at input the supply voltage V*_{BATT}* of the battery of the vehicle, compares it with at least one pre-set threshold value, necessary for guaranteeing proper operation of all the modules of the electronic control unit 2, for example 5V, and, if necessary, raises the supply voltage V*_{BATT}* of the battery (by means of techniques that are known and described in the literature) in such a way as to supply at output a voltage value V*_{BOOST}* always sufficient to supply the modules of the electronic control unit 2

The electronic voltage-control-and-boosting unit 6 moreover receives at input the voltage V*_{BACK-UP}* supplied by the back-up battery integrated within the electronic control unit 1 of the vehicle. The back-up battery is generally able to supply a rather small voltage, for example in the region of 2-3V, and is activated automatically in the case where the main battery is unserviceable and no longer supplies current, for example when it is run-down or in the case where one of the cables for connection to the electrical system of the vehicle is damaged.

In the case of activation of the back-up battery, the electronic voltage-control-and-boosting unit 6 then raises the supply voltage V*_{BACK-UP}* in such a way as to supply at output a voltage value V*_{BOOST}* always sufficient to supply the modules of the electronic control unit 2.
In particular, the voltage V*_{BOOST}* is supplied at input to the voltage regulators 7, 8 and 9, which are configured for supplying the modules of the electronic control unit 2.

In particular, the switching regulator 7 is a DC/DC-voltage converter configured for supplying those modules of the electronic control unit 2 that require a relatively low supply voltage, for example comprised between 2.8V and 5V, and a relatively high supply current, for example comprised between 1000mA and 3200mA but, such as for example the GSM module 2b.

The linear regulator 8 is instead a linear DC/DC-voltage converter, configured for supplying those modules of the electronic control unit 2 that require a relatively low supply voltage and a relatively low supply current, for example comprised, respectively, between 1.2V and 5V and between 300mA and 1000mA, such as for example the microprocessor 2e.

The regulator of the stand-by voltage 9 instead, is configured for supplying those modules of the electronic control unit 2 that, when they are not used, are in a stand-by condition, in which the current absorbed is minimal, for example less than 20 mA.

The regulator of the stand-by voltage 9 has the characteristic circuit for reducing to a minimum the energy consumption of the modules during operation in stand-by.

The switching regulator 7, linear regulator 8 and stand-by regulator 9 are each time designed and/or configured on the basis of the supply voltages and currents required by the modules of the electronic control unit 1.

In particular, the modules of the control unit 2 that must be supplied with the voltage V*_{SWITCH}* are connected internally to the control unit 2 with a pin 5a, which is in turn connected to the pin 13 of the control device 3. Likewise, the modules of the control unit 2 that must be supplied with the voltage V*_{LINEAR}* and with the current *I_{LINEAR}* are connected internally to the control unit 2 with a pin 5b, connected in turn to the pin 14 of the control device 3, whilst the modules of the control unit 2 that must be supplied with the stand-by voltage V*_{STAND-BY}* and the stand-by current *I_{STAND-BY}*, are connected internally to the control unit 2 with a pin 5c, which is in turn connected to the pin 15 of the control device 3.

Furthermore, in an alternative embodiment to the one illustrated in the figure, in which the modules 2a-2e are not integrated in a control unit 2, the modules 2a-2e can be directly connected to the pins 13, 14 and 15 according to the voltage and the current required.

In particular, in the case where some modules of the electronic control unit 2 require a current higher than what can be supplied by the switching regulator 7 or by the linear regulator 8, it is possible to provide a supply-control device comprising more than one switching regulator 7 and/or more than one linear regulator 8 and to connect in parallel to one another a number of switching regulators 7 and/or a number of linear regulators 8 in such a way as to increase the values of current that can be supplied by the device 1. It is clear that the connection in parallel of a number of switching regulators 7 and/or a number of linear regulators 8 must be made during the step of configuration of the control device 3 on the basis of the maximum voltage and current required by the modules of the electronic control unit 1.

As mentioned previously, the supply-control device 3 is configured for being controlled directly by the microprocessor 2e of the control unit 2, or more in general by the microprocessor of the electronic control unit of the vehicle. In this connection, the logic control unit 10 of the supply-control device 3 is connected to the microprocessor 2e through a data bus, for example of the SPI type, connected to the pin 5d of the electronic control unit 2, and is configured for receiving from the microprocessor 2e control signals for the regulators 7, 8 and 9 and for addressing the aforesaid control signals to the respective regulators 7, 8 and 9.

Generally, in order to guarantee proper operation of the electronic control unit of a vehicle, modern electronic control units have available a so-called watchdog function that is activated periodically by the microprocessor of the electronic control unit itself for verifying whether the electronic control unit is functioning properly, and for sending an alarm signal in the case of jamming or malfunctioning of the electronic control unit.

Consequently, in order to restore operation of the modules of the electronic control unit 2 automatically, for example in the case of jamming on account of malfunctioning or jamming of the microprocessor 2e, the logic control unit 10, is configured for controlling periodically, for example every 10s the watchdog function of the electronic control unit 2, i.e., for controlling whether the microprocessor of the electronic control unit 2 activates the aforesaid watchdog function. In fact, in the case where the logic control unit 10 detects the lack of implementation of the watchdog function, indicating the fact that the microprocessor 2e is not functioning properly or has jammed, the logic control unit 10 re-activates the electronic control unit 2 automatically, restoring its proper operation through the activation of reset of the module 2e.

In particular, the device 3 enables all the modules of the electronic control unit 1 of the vehicle to be set in the standby condition simultaneously, including the microprocessor 2e.

In fact, the logic control unit 10 is configured for detecting through the pin 16 events that require re-activation of one or more modules that are in standby, for example re-activation of the GSM module 2b following upon reception of a call, and for restoring supply of the microprocessor 2e and of the modules that must be re-activated, when said events occur.

This function enables optimal management of the energy consumption of the electronic control unit 1 of the vehicle in so far as it is no longer necessary to supply the microprocessor 2e continuously when all the modules are in standby, so that it can detect the aforesaid events.

The advantages of the supply-control device 3 according to the invention, are:
- the possibility of managing a wide range of voltage values of the battery of the vehicle, for example from 1 to 40V;
- the supply to the electronic control unit of the vehicle of the correct supply voltage and current, also in the cases where the voltage values provided by the battery of the vehicle depart substantially from the values required by the electronic control unit;
- the reduction of the space necessary for housing the electronic control units and the number of the devices for regulation of the voltage for supplying the vehicle thanks to the construction of the control device in the form of a single integrated circuit directly integrated within the electronic control unit 1;
- optimization of the energy consumption of the electronic control unit of the vehicle, thanks to the regulator of the stand-by voltage;
- the possibility of configuring the output voltages of the regulators 7, 8 and 9 in a wide range of voltages (1.2 V-5V);
- a complete management of the power-on/off through the reset function of the microprocessor 2e, internal to the control device 3;
- complete management of the function of Wake_up of the electronic control unit 1.

Finally, it is clear that modifications and variations can be made to the device described and illustrated herein, without thereby departing from the sphere of protection of the present invention, as defined in the annexed claims.

For instance, the supply-control device according to the invention can be used for controlling supply of any type of electronic control unit of a vehicle or, for controlling simultaneously the supply of a number of electronic control units present on a vehicle.

## Claims

1. An electrical power supply control device (3) for use in an automotive electronic control unit (1), the electrical power supply control device (3) being in the form of an integrated circuit, housed in a casing (20), and configured to be connected to an automotive main electrical power supply device to receive a main supply voltage (V_{BATT}), to a back-up electrical power supply device (4) to receive a back-up supply voltage (V_{BACK-UP}), and to electronic telematic modules (2a-2d) and a microprocessor (2e) to control power supply thereof; wherein the electrical power supply control device (3) comprises:
• a boost switching regulator (6) configured to receive the main supply voltage (V_{BATT}) and the back-up supply voltage (V_{BACK-UP}), and to output a boost supply voltage (V_{BOOST}) requisite for guaranteeing proper operation of the electronic telematic modules (2a-2d) and the microprocessor (2e) of an electronic telematic function control device (2), based on the main supply voltage (V_{BATT}) or, in case of failure of the main electrical power supply device (4), the back-up supply voltage (V_{BACK-UP}); and
• at least one Buck switching voltage regulator (7) configured to receive the boost supply voltage (V_{BOOST}) and to output a switch supply voltage (V_{SWITCH}) for the electronic telematic modules (2a-2d) which are to be supplied with a relatively low supply voltage and a relatively high supply current;
• at least one linear voltage regulator (8) configured to receive the boost supply voltage (V_{BOOST}) and to output a linear supply voltage (V_{LINEAR}) for the electronic telematic modules (2a-2d) which are to be supplied with a relatively low supply voltage and a relatively low supply current;
• a stand-by voltage regulator (9) configured to receive the boost supply voltage (V_{BOOST}) and to output a stand-by supply voltage (V_{STAND-BY}) for the electronic telematic modules (2a-2d) which are in a stand-by condition; and
• a logic control unit (10) connected to the microprocessor (2e), the boost switching voltage regulator (6), the Buck switching voltage regulator (7), the linear voltage regulator (8) and the stand-by voltage regulator (9) and configured to receive control signals from the microprocessor (2e) and to control the Buck switching voltage regulator (7), the linear voltage regulator (8) and the stand-by voltage regulator (9) based on the received control signals;
wherein the microprocessor (2e) is programmed to periodically perform a watchdog function to check proper operation of the electronic telematic function control device (2);
wherein the logic control unit (10) is designed to periodically check performance of the watchdog function by the microprocessor (2e) and, in case the watchdog function is detected to be unperformed, to reset the microprocessor (2e) to restore proper operation of the electronic telematic function control device (2);
and wherein the logic control unit (10) is further configured to receive an external control signal indicative of occurrence of events that require operation of one or more electronic telematic modules (2a-2d), and to restore proper supply of the microprocessor (2e) and of the electronic telematic modules (2a-2d) that are in a stand-by condition and that are required to be operated.

2. An automotive electronic control unit (1) comprising:
. a casing (20);
. an electronic telematic function control unit (2) housed in the casing (20) and comprising:
- electronic telematic modules (2a-2d) in the form of a single or different integrated circuits, operable to execute telematic functions, and comprising one or more of the following: an USB interface module (2a), a cellular telephone module (2b), a satellite navigation module (2c) and a data transmission module (2d); and
- a microprocessor (2e) connected to the electronic telematic modules (2a-2d) and to an electrical power supply control device (3) to control operation thereof;
. a back-up electrical power supply device (4) housed in the casing (20) and designed to output a back-up supply voltage (V_{BACK-UP}) lower than a supply voltage requisite for guaranteeing proper operation of the electronic telematic modules (2a-2d) and the microprocessor (2e); and
. the electrical power supply control device (3) according to claim 1.

## Patentansprüche

1. Steuervorrichtung (3) für eine elektrische Leistungsversorgung zur Verwendung in einer elektronischen Kraftfahrzeug-Steuereinheit (1), welche Steuervorrichtung (3) für die elektrische Leistungsversorgung in Form einer integrierten Schaltung vorliegt, in einem Gehäuse (20) untergebracht ist und so konfiguriert ist, dass sie mit einer elektrischen Kraftfahrzeug-Hauptleistungsversorgungseinrichtung, um eine Hauptversorgungsspannung (V_{BATT}) zu erhalten, mit einer elektrischen Reserve-Versorgungsspannungseinrichtung (V_{BACK-UP}) (4), um eine Reserve-Versorgungsspannung (V_{BACK-UP}) zu erhalten, und mit elektronischen Telematikmodulen (2a-2d) und einem Mikroprozessor (2e) zur Steuerung der Leistungsversorgung derselben verbunden ist;
wobei die Steuervorrichtung (3) für eine elektrische Leistungsversorgung enthält:
• einen Verstärkungsschaltregler (6), der dafür konfiguriert ist, die Hauptversorgungsspannung (V_{BATT}) und die Reserve-Versorgungsspannung (V_{BACK-UP}) zu erhalten und eine Verstärkungs-Versorgungsspannung (V_{BOOST}) auszugeben, die erforderlich ist, um eine ordnungsgemäße Funktion der elektronischen Telematikmodule (2a-2d) und des Mikroprozessors (2e) einer elektronischen Telematik-Funktionssteuereinrichtung (2) zu gewährleisten, und zwar auf der Grundlage der Hauptversorgungsspannung (V_{BATT}) oder, im Fall des Versagens der elektrischen Hauptversorgungseinrichtung (4), der Reserve-Versorgungsspannung (V_{BACK-UP}) ; und
• mindestens einen Abwärtswandler-Spannungsregler (7), der dafür konfiguriert ist, die Verstärkungs-Versorgungsspannung (V_{BOOST}) zu erhalten und eine Schalt-Versorgungsspannung (V_{SWITCH}) für die elektronischen Telematikmodule (2a-2d) auszugeben, die mit einer relativ niedrigen Versorgungsspannung und einem relativ hohen Versorgungsstrom versorgt werden müssen;
• mindestens einen linearen Spannungsregler (8), der dafür konfiguriert ist, die Verstärkungs-Versorgungsspannung (V_{BOOST}) zu erhalten und eine lineare Spannung (V_{LINEAR}) für die elektronischen Telematikmodule (2a-2d) auszugeben, die mit einer relativ niedrigen Versorgungsspannung und einem relativ niedrigen Versorgungsstrom versorgt werden müssen;
• einen Bereitschafts-Spannungsregler (9), der dafür konfiguriert ist, die Verstärkungs-Versorgungsspannung (V_{BOOST}) zu erhalten und eine Bereitschafts-Spannung (V_{STAND-BY}) für die elektronischen Telematikmodule (2a-2d) auszugeben, die in einem Bereitschaftszustand sind; und
• eine Logiksteuereinheit (10), die mit dem Mikroprozessor (2e), dem Verstärkungs-Spannungsregler (6), dem Abwärtswandler-Spannungsregler (7), dem linearen Spannungsregler (8) und dem Bereitschafts-Spannungsregler (9) verbunden ist und dafür konfiguriert ist, Steuersignale von dem Mikroprozessor (2e) zu erhalten und den Verstärkungs-Spannungsregler (6), den Abwärtswandler-Spannungsregler (7), den linearen Spannungsregler (8) und den Bereitschaft-Spannungsregler (9) auf der Grundlage der empfangenen Steuersignale zu steuern;
wobei der Mikroprozessor (2e) dafür programmiert ist, periodisch eine Überwachungsfunktion auszuführen, um den ordnungsgemäßen Betrieb der Steuereinrichtung (2) für die elektronische Telematikfunktion zu überprüfen;
wobei die Logiksteuereinheit (10) dafür konstruiert ist, die Leistung der Überwachungsfunktion durch den Mikroprozessor (2e) periodisch zu überprüfen und in dem Fall, in dem festgestellt wird, dass die Überwachungsfunktion eine unzureichende Leistung hat, den Mikroprozessor (2e) zurückzusetzen, um den ordnungsgemäßen Betrieb der Steuereinrichtung für die elektronische Telematikfunktion (2) wieder herzustellen;
und wobei die Logiksteuereinheit (10) ferner dafür konfiguriert ist, ein externes Steuersignal zu empfangen, das das Auftreten von Ereignissen anzeigt, die den Betrieb eines oder mehrerer elektronischer Telematikmodule (2a-2d) erfordern, und die ordnungsgemäße Versorgung des Mikroprozessors (2e) und der elektronischen Telematikmodule (2a-2d), die in dem Bereitschaftszustand sind und die in Betrieb gesetzt werden müssen, wiederherzustellen.

2. Elektronische Kraftfahrzeug-Steuereinheit (1), enthaltend:
• ein Gehäuse (20);
• eine Steuereinheit (2) für eine elektronische Telematikfunktion, die in dem Gehäuse (20) untergebracht ist und enthält:
- elektronische Telematikmodule (2a-2d) in Form einer einzelnen oder verschiedener integrierter Schaltungen, die zur Ausführung von Telematikfunktionen betätigbar sind und eines oder mehrere der folgenden Elemente enthalten: ein USB-Schnittstellenmodul (2a), ein Mobiltelefonmodul (2b), ein Satellitennavigationsmodul (2c) und ein Datenübertragungsmodul (2d); und
- einen Mikroprozessor (2e), der mit den elektronischen Telematikmodulen (2a-2d) und einer Steuereinrichtung (3) für die elektrische Leistungsversorgung verbunden ist, um deren Betrieb zu steuern;
• eine in dem Gehäuse (20) untergebrachte elektrische Reserve-Leistungsversorgungseinrichtung (4), die dafür konstruiert ist, eine Reserve-Versorgungsspannung (V_{BACK-UP}) auszugeben, die niedriger ist als eine erforderliche Versorgungsspannung zum Gewährleisten des ordnungsgemäßen Betriebs der elektronischen Telematikmodule (2a-2d) und des Mikroprozessors (2e); und
• die Steuervorrichtung (3) für eine elektrische Leistungsversorgung nach Anspruch 1.

## Revendications

1. Dispositif de commande d'alimentation en énergie électrique (3) destiné à être utilisé dans une unité de commande électronique (1) pour automobile, le dispositif de commande d'alimentation en énergie électrique (3) se présentant sous la forme d'un circuit intégré, logé dans un carter (20), et configuré pour être raccordé à un dispositif d'alimentation en énergie électrique principal pour automobile pour recevoir une tension d'alimentation principale (V_{BATT}), à un dispositif d'alimentation en énergie électrique de secours (4) pour recevoir une tension d'alimentation de secours (V_{BACK-UP}) et à des modules télématiques électroniques (2a-2d) et à un microprocesseur (2e) pour commander son alimentation en énergie ;
dans lequel le dispositif de commande d'alimentation en énergie électrique (3) comprend :
un régulateur de commutation de survoltage (6) configuré pour recevoir la tension d'alimentation principale (V_{BATT}) et la tension d'alimentation de secours (V_{BACK-UP}), et pour produire une tension d'alimentation de survoltage (V_{BOOST}) nécessaire pour garantir le bon fonctionnement des modules télématiques électroniques (2a-2d) et du microprocesseur (2e) d'un dispositif de commande de fonction télématique électronique (2), en fonction de la tension d'alimentation principale (V_{BATT}) ou dans le cas d'une défaillance du dispositif d'alimentation en énergie électrique principale (4), de la tension d'alimentation de secours (V_{BACK-UP}) ; et
au moins un régulateur de tension de commutation de type Buck (7) configuré pour recevoir la tension d'alimentation de survoltage (V_{BOOST}) et pour produire une tension d'alimentation de commutateur (V_{SWITCH}) pour les modules télématiques électroniques (2a-2d) qui doivent être alimentés avec une tension d'alimentation relativement faible et un courant d'alimentation relativement élevé ;
au moins un régulateur de tension linéaire (8) configuré pour recevoir la tension d'alimentation de survoltage (V_{BOOST}) et pour produire une tension d'alimentation linéaire (V_{LINEAR}) pour les modules télématiques électroniques (2a-2d) qui doivent être alimentés avec une tension d'alimentation relativement faible et un courant d'alimentation relativement faible ;
un régulateur de tension d'attente (9) configuré pour recevoir la tension d'alimentation de survoltage (V_{BOOST}) et pour produire une tension d'alimentation d'attente (V_{STAND-BY}) pour les modules télématiques électroniques (2a-2d) qui sont dans une condition d'attente ; et
une unité de commande logique (10) raccordée au microprocesseur (2e), au régulateur de tension de commutation de survoltage (6), au régulateur de tension de commutation de type Buck (7), au régulateur de tension linéaire (8) et au régulateur de tension d'attente (9) et configurée pour recevoir des signaux de commande du microprocesseur (2e) et pour commander le régulateur de tension de commutation de type Buck (7), le régulateur de tension linéaire (8) et le régulateur de tension d'attente (9) en fonction de signaux de commande reçus ;
dans lequel le microprocesseur (2e) est programmé pour réaliser, périodiquement, une fonction de surveillance afin de vérifier le bon fonctionnement du dispositif de commande de fonction télématique électronique (2) ;
dans lequel l'unité de commande logique (10) est conçue pour vérifier périodiquement la performance de la fonction de surveillance par le microprocesseur (2e) et dans le cas dans lequel on détecte que la fonction de surveillance n'est pas réalisée, redémarrer le microprocesseur (2e) pour rétablir le bon fonctionnement du dispositif de commande de fonction télématique électronique (2) ;
et dans lequel l'unité de commande logique (10) est en outre configurée pour recevoir un signal de commande externe indiquant l'occurrence d'évènements qui nécessitent le fonctionnement d'un ou de plusieurs modules télématiques électroniques (2a-2d), et pour rétablir la bonne alimentation du microprocesseur (2e) et des modules télématiques électroniques (2a-2d) qui sont dans une condition d'attente et qui doivent être actionnés.

2. Unité de commande électronique (1) pour automobile comprenant :
un carter (20) ;
une unité de commande de fonction télématique électronique (2) logée dans le carter (20) et comprenant :
des modules télématiques électroniques (2a-2d) sous la forme d'un seul circuit intégré ou de différents circuits intégrés, pouvant fonctionner pour exécuter des fonctions télématiques, et comprenant un ou plusieurs des éléments suivants : un module d'interface USB (2a), un module de téléphone portable (2b), un module de navigation par satellite (2c) et un module de transmission de données (2d) ; et
un microprocesseur (2e) raccordé aux modules télématiques électroniques (2a-2d) et à un dispositif de commande d'alimentation en énergie électrique (3) pour commander son fonctionnement ;
un dispositif d'alimentation en énergie électrique de secours (4) logé dans le carter (20) et conçu pour produire une tension d'alimentation de secours (V_{BACK-UP}) inférieure à une tension d'alimentation nécessaire pour garantir le bon fonctionnement des modules télématiques électroniques (2a-2d) et du microprocesseur (2e) ; et
le dispositif de commande d'alimentation en énergie électrique (3) selon la revendication 1.
